# EUROPEAN PATENT APPLICATION

(11) **EP 3 825 942 A1**
(43) Date of publication of application: **26.05.2021**
(21) Application number: 19837337.5
(22) Date of filing: 17.04.2019
(51) Int. Cl.: G06Q 30/02

(54) **BLOCKCHAIN-BASED METHOD AND APPARATUS FOR ISSUING REWARD TO WORK USER**

(30) Priority: 18.07.2018 CN 201810793078
(71) Applicant: Advanced New Technologies Co., Ltd., George Town, Grand Cayman KY1-9008 (KY)
(72) Inventor: YANG, Xinying, Hangzhou, Zhejiang 311121 (CN)
(74) Representative: Bryn-Jacobsen, Caelia
(86) International application number: PCT/CN2019/083056
(87) International publication number: WO 2020/015408

(57) **Abstract**

Disclosed are method and device of issuing a reward to a work user on the basis of a blockchain. A blockchain network comprises a plurality of service nodes, the service nodes have authorities to publish works to the blockchain, a virtual resource is used as a transfer medium among the plurality of service nodes to conduct a copyright-related transfer. For a service node using a target work, a reward is issued to the service node by means of a consensus mechanism in the blockchain network, such that a virtual resource corresponding to the service node is increased.

## Description

### TECHNICAL FIELD

Embodiments of the present specification relate to the field of information technologies, and relates, in particular, to a method and device of issuing rewards to work users on the basis of a blockchain.

### BACKGROUND

Copyright service platforms have emerged as the market pays more and more attention to copyrights of works. Creators of works can register as users on a copyright service platform, upload their works to the copyright service platform, conduct copyright-related transfers with other users, and obtain copyright incomes.

Wherein, the copyright-related transfers refer to various transfer activities on the basis of copyrighted works. For example, a user A grants copyright property rights (such as a reproduction right, a distribution right, an adaptation right, a performing right, etc.) of a work created by himself/herself to a user B, and charges copyright licensing fees. In another example, a user B uses a work created by a user A (such as enjoying the work, downloading the work, etc.), and pays a work use fee to user A.

In practice, in order to encourage work use behaviors, the copyright service platform will issue a reward, such as issuing cashes, to a user who uses a work on the copyright service platform. Specifically, when a server of the copyright service platform monitors that a certain user uses a work, it will add a certain amount to an account corresponding to a user identification of the user and regard the same as a reward.

Accordingly, there is a need for a more open and credible method of issuing a reward to a work user.

### SUMMARY

In order to solve the problem that the existing method of issuing a reward to a work user is not open and credible enough, embodiments of the present specification provide a method and device of issuing a reward to a work user on the basis of a blockchain. The technical solutions are as follows:

According to a first aspect of the embodiments of the present specification, provided is a blockchain-based method of issuing a reward to a work user, wherein a blockchain network comprises a plurality of service nodes, a virtual resource is used as a transfer medium among the plurality of service nodes to conduct a copyright-related transfer, and the method comprises:
when it is monitored that a target node performs a work use operation on a target work, determining an increment in the virtual resource according to the work use operation, wherein the target node is any of the service nodes;
constructing a user reward transfer on the basis of a node identification of the target node and the determined increment in the virtual resource; and
broadcasting the user reward transfer to the blockchain network, such that after a plurality of nodes in the blockchain network pass a consensus verification of the user reward transfer, a corresponding relationship between the node identification and the determined increment in the virtual resource is established and stored in a blockchain.

According to a second aspect of the embodiments of the present specification, provided is a blockchain-based device of issuing a reward to a work user, wherein a blockchain network comprises a plurality of service nodes, a virtual resource is used as a transfer medium among the plurality of service nodes to conduct a copyright-related transfer, and the device is a node in the blockchain network; and
the device comprises:
a determination module, configured to, when it is monitored that a target node performs a work use operation on a target work, determine an increment in the virtual resource according to the work use operation, wherein the target node is any of the service nodes;
a construction module, configured to construct a user reward transfer on the basis of a node identification of the target node and the determined increment in the virtual resource; and
a broadcasting module, configured to broadcast the user reward transfer to the blockchain network, such that after a plurality of nodes in the blockchain network pass a consensus verification of the user reward transfer, a corresponding relationship between the node identification and the determined increment in the virtual resource is established and stored in a blockchain.

According to a third aspect of the embodiments of the present specification, provided is a blockchain-based system of issuing a reward to a work user, comprising a blockchain network composed of a plurality of service nodes, wherein the service nodes have authorities to publish works to a blockchain, and a virtual resource is used as a transfer medium among the plurality of service nodes to conduct a copyright-related transfer;
any node in the blockchain network is configured to, when it is monitored that a target node performs a work use operation on a target work, determine an increment in the virtual resource according to the work use operation, wherein the target node is any of the service nodes; construct a user reward transfer on the basis of a node identification of the target node and the determined increment in the virtual resource; and broadcast the user reward transfer to the blockchain network; and
a plurality of nodes in the blockchain network, configured to, after passing a consensus verification of the user reward transfer, establish a corresponding relationship between the node identification and the determined increment in the virtual resource and stored it in a blockchain.

In the technical solutions provided by the embodiments of the present specification, a blockchain network includes a plurality of service nodes, the service nodes have rights of publishing works to a blockchain, and a virtual resource is used as a transfer medium among the plurality of service nodes to conduct copyright-related transfers. For a service node using a target work, a reward is issued to the service node by means of a consensus mechanism in the blockchain network, such that a virtual resource corresponding to the service node is increased. The process of issuing a reward to a service node using a target work is participated in by a plurality of nodes in the blockchain network by means of a consensus mechanism. Moreover, a record of issuing the reward to the service node will be stored in a blockchain to make public by the plurality of nodes, and the data stored in the blockchain has the characteristics of not able to be tempered with. As can be seen, through the embodiments of the present specification, the process of issuing a reward to a work user is open, and a record of issuing a reward to a work publisher is credible.

It should be understood that the above general description and the following detailed description are only exemplary and explanatory, and cannot limit the embodiments of the present specification.

In addition, any embodiment in the embodiments of the present specification does not need to achieve all the above effects.

### BRIEF DESCRIPTION OF THE DRAWINGS

In order to more clearly describe the technical solutions in the embodiments of the present specification or the prior art, the accompanying drawings that need to be used in descriptions of the embodiments or the prior art will be briefly introduced below. It is apparent that the accompanying drawings described below are only some of the embodiments described in the embodiments of the present specification. For those of ordinary skill in the art, other accompanying drawings can further be obtained according to these accompanying drawings.
FIG. 1 is a schematic flowchart of a method of issuing a reward to a work user on the basis of a blockchain according to an embodiment of the present specification;
FIG. 2 is a schematic flowchart of a copyright income distribution method on the basis of a blockchain according to an embodiment of the present specification;
FIG. 3 is a schematic flowchart of another method of distributing a copyright income to a work user on the basis of a blockchain according to an embodiment of the present specification;
FIG. 4 is a schematic structural diagram of a device of issuing a reward to a work user on the basis of a blockchain according to an embodiment of the present specification;
FIG. 5 is a schematic structural diagram of a system of issuing a reward to a work user on the basis of a blockchain according to an embodiment of the present specification; and
FIG. 6 is a schematic structural diagram of a computer device used to configure the method according to an embodiment of the present specification.

### DETAILED DESCRIPTION

At present, in an application scenario of copyright services, a reward is usually issued to a work user to encourage work use behaviors. However, the existing method of issuing a reward to a work user is mainly implemented by servers of a copyright service platform, and the entire process of issuing a reward is not open and transparent enough. In addition, a reward issuing record corresponding to each work user stored on the server of the copyright service platform may also be tampered with, and repudiation often occurs on the copyright service platform for work users. In other words, the method of issuing a reward to a work user is not highly credible, and the incentive effect on work users is poor.

To solve this problem, the present invention first proposes a blockchain-based copyright-related transfer method, and then, on the basis of the copyright-related transfer method, provides a method of issuing a reward to a work user.

Specifically, in the blockchain-based copyright-related transfer method, a blockchain network includes a plurality of service nodes, the service nodes have rights of publishing works to a blockchain, and the plurality of service nodes use a virtual resource as a transfer medium to conduct copyright-related transfers.

Further, the blockchain network also includes a management node, and the plurality of service nodes use a virtual resource issued by the management node as a transfer medium to conduct copyright-related transfers. The virtual resource corresponding to each service node can be exchanged into property via the management node.

Wherein, a typical copyright-related transfer may be described as that:
for a copyright-related transfer event corresponding to a target work, a payer node determines a payment amount, wherein the payer node is a service node corresponding to a user who uses or purchases the target work;
the payer node determines the payment amount of virtual resource as a decrement in the virtual resource corresponding to itself, and determines the payment amount of virtual resource as an increment in the virtual resource corresponding to a publisher node, wherein the publisher node is a service node corresponding to a user who publishes the target work; and
the payer node constructs a payment transfer including the determined decrement in the virtual resource corresponding to itself and the increment in the virtual resource corresponding to the publisher node, and publishes the payment transfer to the blockchain.

Wherein, the virtual resource is actually a kind of electronic data, and may specifically be in a form of game currency, points, virtual items, etc. For the convenience of description, in the following examples, the work is specifically a music work, the virtual resource is specifically "TONs," and one amount of virtual resource is one TON. The original meaning of the name of the TON is derived from tone (tone, hue). At the same time, ton itself has a meaning of weight, symbolizing value and a sense of density, and the name is thus determined.

Wherein, the payment amount is specifically the amount of virtual resource that needs to cost for using or purchasing the target work, which may be preset by the publisher of the target work.

In other words, in the above copyright-related transfer method, the payment transfer being published to the blockchain means that a purchaser or user of the work pays a virtual resource to the publisher of the work, and a virtual resource payment record is stored in the blockchain to be made public.

Through the above copyright-related transfer method, a service node may pay a virtual resource as a payer in some copyright-related transfer events, and charge a virtual resource as a publisher in some copyright-related transfer events. A virtual resource payment record corresponding to each copyright-related transfer event will be stored in the blockchain to be made public. On the basis of the virtual resource payment records stored in the blockchain, the stock of a virtual resource corresponding to each service node can be determined.

It should be noted that the transfer described in the present specification may be a property exchange activity in a common sense, such as a copyright-related transfer (purchasing a copyrighted work, using a copyrighted work, etc.). In addition, in the sense of a blockchain, a transfer may also refer to a piece of data that is created by a user through a client terminal of the blockchain and needs to be eventually published to a distributed database of the blockchain.

Wherein, transfers in the blockchain are classified into transfers in a narrow sense and transfers in a broad sense. A transfer in the narrow sense refers to a transfer of values published by a user to a blockchain. For example, in a traditional Bitcoin blockchain network, a transfer may be an account transfer initiated by a user in a blockchain. A transfer in the broad sense refers to a piece of service data with a service intention published by a user to a blockchain. For example, an operator may build a consortium blockchain on the basis of actual service requirements, and rely on the consortium blockchain to deploy some online services of other types that are not related to value transfers (such as a house-rental service, a vehicle scheduling service, an insurance claim service, a credit service, a medical service, etc.). In this type of consortium blockchain, a transfer may be a service message or service request with a service intention published by the user in the consortium blockchain.

Herein, in addition to expressions of the copyright-related transfer and the copyright transfer, other "transfers" generally refer to transfers in the sense of a blockchain.

On the basis of the above blockchain-based copyright-related transfer method, the present invention provides a method of issuing a reward to a work user. For a service node using a target work, a reward is issued to the service node by means of a consensus mechanism in the blockchain network, such that a virtual resource corresponding to the service node is increased. The process of issuing a reward to a service node that uses a target work is participated in by a plurality of nodes in the blockchain network by means of a consensus mechanism. Moreover, a record of issuing the reward to the service node will be stored in a blockchain by the plurality of nodes for publicity, and the data stored in the blockchain cannot be tempered with. As can be seen, through the embodiments of the present specification, the process of issuing a reward to a work user is open, and the record of issuing the reward to the work user is credible.

In order to enable those skilled in the art to better understand the technical solutions in the embodiments of the present specification, the technical solutions in the embodiments of the present specification will be described in detail below with reference to the accompanying drawings in the embodiments of the present specification. Obviously, the described embodiments are only a part of the embodiments in the present specification, rather than all the embodiments. On the basis of the embodiments in the present specification, all other embodiments obtained by those of ordinary skill in the art should fall within the protection scope.

The technical solutions provided by the various embodiments of the present specification will be described in detail below with reference to the accompanying drawings.

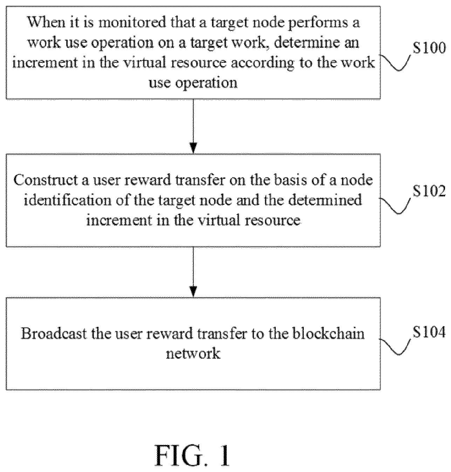

FIG. 1 is a schematic flowchart of a method of issuing a reward to a work user on the basis of a blockchain according to an embodiment of the present specification, including the following steps:

S100: when it is monitored that a target node performs a work use operation on a target work, determining an increment in the virtual resource according to the work use operation.

In the embodiment of the present specification, a blockchain network includes a plurality of service nodes, the service nodes generally have rights of publishing works to a blockchain, and the plurality of service nodes use a virtual resource used as a transfer medium among them to conduct copyright-related transfers.

At the same time, it should be noted that a virtual resource expenditure record and a virtual resource income record of each service node are stored in the blockchain. Wherein, for each service node, the virtual resource expenditure record corresponding to the service node is recorded in a form in which a node identification of the service node corresponds to a certain decrement in the virtual resource, for example, "node A: -20," indicating that a node A spends 20 TONs. The virtual resource income record corresponding to the service node is recorded in a form in which the node identification of the service node corresponds to a certain increment in the virtual resource, for example, "node A: 20," indicating that the node A earns 20 TONs.

In addition, for each service node, the stock of the virtual resource corresponding to the service node may be obtained by tracing back the blockchain and combining the increment in the virtual resource and the decrement in the virtual resource corresponding to the service node. For example, stored on the blockchain, there are 3 virtual resource expenditure records of node A, with corresponding decrement in the virtual resource respectively being -20, -50, and - 60, and there are 3 virtual resource income records of node A, with corresponding increment in the virtual resources respectively being 50, 63, and 80. Then, as of now, the stock of the virtual resource corresponding to node A is: - 20 - 50 - 60 + 50 + 63 + 80 = 63 TONs.

An executive subject of the present method may be any service node (referred to as an execution node) in the blockchain network, and the execution node performs the method shown in FIG. 1 by calling a smart contract stored in the blockchain, which is used for implementing the method process shown in FIG. 1. It should be noted that the execution node may also be randomly specified from the various service nodes whenever the method shown in FIG. 1 needs to be performed.

It should further be noted that, because the target node is also any service node in the blockchain network, the target node and the execution node may be the same service node.

In addition, a management node may also be added to the blockchain network and regarded as an execution node. The management node does not participate in copyright-related transfers, but is only responsible for the management of the copyright-related transfers. The management node usually also performs the method shown in FIG. 1 by calling the smart contract stored in the blockchain and used for implementing the method process shown in FIG. 1.

Moreover, the management node is generally an issuer of a transfer medium (i.e., a virtual resource) used in the copyright-related transfers, and any service node requests the management node to exchange its own virtual resource into property. For example, the stock of the virtual resource of service node A is 20 TONs. It is assumed that a management party corresponding to the management node stipulates that one TON can be exchanged into 10 RMB, and then service node A can request the management node to exchange the 20 TONs owned by the service node A itself into 200 RMB

In the embodiment of the present specification, the target work is usually any work published in the blockchain by any service node. When it is monitored that the target node uses the target work in the blockchain, the execution node may start to perform the process of issuing a reward to the target node. A virtual resource to be issued to the target node, i.e., an increment in the virtual resource corresponding to the target node, is determined first.

Wherein, when it is monitored that the target node performs a work use operation on the target work, the increment in the virtual resource may be determined according to the work use operation in a plurality of manners. Two manners are provided below:

Manner 1: determining a basic increment in the virtual resource on the basis of the work use operation. At this time, the determined increment in the virtual resource may only include the basic increment in the virtual resource. Specifically, a specified resource amount of virtual resource may be determined as the basic increment in the virtual resource, or the specified resource amount may be attenuated according to the specified resource amount and a preset attenuation rule, and the attenuated specified resource amount of virtual resource is determined as the basic increment in the virtual resource.

For example, the specified resource amount may be 5. When it is monitored that the target node publishes the target work to the blockchain, 5 TONs may be determined as the basic increment in the virtual resource. At this time, the determined increment in the virtual resource is 5 TONs.

For another example, the specified resource amount may be attenuated. Specifically, an attenuation rule "attenuate 1 per year" may be preset. Assuming that the time when the specified resource amount is preset is year 2015, then, up to now (year 2018), the specified resource amount is attenuated to 2. Therefore, 2 TONs may be determined as the basic increment in the virtual resource. At this time, the determined increment in the virtual resource is 2 TONs.

In addition, if the work use operation is a work download operation, the specified resource amount (such as 1) of virtual resource is determined as the basic increment in the virtual resource.

Further, if the work use operation is a work viewing or listening operation, the basic increment in the virtual resource is determined according to a use duration corresponding to the work viewing or listening operation. The use duration is positively correlated to the basic increment in the virtual resource.

For example, assuming that the target work is a certain song, and if the duration of the user corresponding to the target node listening to this song reaches 1 hour, the basic increment in the virtual resource is 1 TON. If the duration of listening to this song reaches 2 hours, the basic increment in the virtual resource is 2 TONs.

Manner 2: determining a basic increment in the virtual resource on the basis of the work use operation, and determining at least one of a share-related increment in the virtual resource and a type-related increment in the virtual resource on the basis of the target work.

In this case, the determined increment in the virtual resource not only includes the basic increment in the virtual resource, but also includes at least one of the share-related increment in the virtual resource and the type-related increment in the virtual resource.

In the embodiment of the present specification, the share-related increment in the virtual resource means a portion of a copyright income of the target work that the work user is entitled to obtain due to usage of the target work. The method for determining the share-related increment in the virtual resource will be described in detail later.

In the embodiment of the present specification, the type-related increment in the virtual resource may be determined in the following manner:

determining a work type corresponding to the target work and regarding the same as a target work type; determining, according to preset corresponding relationships between work types and resource amounts, a resource amount corresponding to the target work type and regarding the same as a target resource amount; and determining the target resource amount of virtual resource as the type-related increment in the virtual resource.

For example, assuming that the work is a music work, and the preset work types are jazz music, folk music, and rock music. A resource amount corresponding to the jazz music is 5, a resource amount corresponding to the folk music is 8, and a resource amount corresponding to the rock music is 3. Thus, if the work type of the target work is jazz music, then 5 TONs are determined as the type-related increment in the virtual resource.

It should be noted that the resource amount corresponding to each work type can be adjusted according to actual service needs. Specifically, a resource amount adjustment instruction may be received; and a resource amount corresponding to at least one work type is adjusted according to the resource amount adjustment instruction.

More specifically, if the corresponding relationships between the work types and the resource amounts are set in advance through a smart contract, when the resource amount corresponding to at least one work type is adjusted, the smart contract needs to be regenerated on the basis of the adjusted corresponding relationship between the work type and the resource amount, and published to the blockchain.

In addition, the type-related increment in the virtual resource may also be determined in the following manner:

determining a work type corresponding to the target work and regarding the same as a target work type; determining, according to a preset corresponding relationship between work types and coefficients, a coefficient corresponding to the target work type and regarding the same as a target coefficient; and multiplying the basic increment in the virtual resource by the target coefficient to obtain the type-related increment in the virtual resource.

For example, assuming that the work is a music work, and the preset work types are jazz music, folk music, and rock music. A coefficient corresponding to the jazz music is 0.5, a coefficient corresponding to the folk music is 0.8, and a coefficient corresponding to the rock music is 0.3. At the same time, the basic increment in the virtual resource is 2 TONs, and therefore, if the work type of the target work is jazz music, 2 ^{∗} 0.5 = 1 TON is determined as the type-related increment in the virtual resource.

It should be noted that the coefficient corresponding to each work type can be adjusted according to actual service needs. Specifically, a coefficient adjustment instruction may be received; and a coefficient corresponding to at least one work type is adjusted according to the coefficient adjustment instruction.

More specifically, if the corresponding relationship between the work types and the coefficients are set in advance through a smart contract, when the coefficient corresponding to at least one work type is adjusted, the smart contract needs to be regenerated on the basis of the adjusted corresponding relationship between the work type and the coefficient, and published to the blockchain.

To sum up, if the increment in the virtual resource is determined by the above Manner 2, then the above examples are followed. The basic increment in the virtual resource is 2 TONs (the duration of the user corresponding to the target node listening to the target work reaches 2 hours), the share-related increment in the virtual resource is 1 TON, the type-related increment in the virtual resource is 2 ^{∗} 0.5 = 1 TON, and therefore, the total increment in the virtual resource is: 2 + 1 + 1 = 4 TONs.

In addition, if the work use operation is a work download operation, the target node needs to pay 8 TONs to download the target work. At the same time, the basic increment in the virtual resource is 1 TON (when the work use operation is a work download operation, the virtual resource in a specified amount of 1 is determined as the basic increment in the virtual resource), the share-related increment in the virtual resource is 1 TON, the type-related increment in the virtual resource is 2 ^{∗} 0.5 = 1 TON, and therefore, the total increment in the virtual resource is: 1 + 1 + 1 = 3 TONs. The actual cost for the target node downloading the target work is 8 - 3 = 5 TONs.

S102: constructing a user reward transfer on the basis of a node identification of the target node and the determined increment in the virtual resource.

S104: broadcasting the user reward transfer to the blockchain network.

After the increment in the virtual resource is determined, the increment in the virtual resource may be published to the blockchain. Specifically, as described above, for any service node, a virtual resource income record corresponding to the service node is recorded in a form in which the node identification of the service node corresponds to a certain increment in the virtual resource. Therefore, the user reward transfer may be constructed on the basis of the node identification of the target node and the increment in the virtual resource, and then the user reward transfer is broadcast to the blockchain network, such that after a plurality of nodes in the blockchain network pass a consensus verification of the user reward transfer, a corresponding relationship between the node identification and the determined increment in the virtual resource is established and stored in the blockchain.

It should be noted here that the plurality of nodes are nodes participating in the consensus verification. The plurality of nodes may be a plurality of service nodes. If the blockchain network includes not only service nodes but also other nodes, such as management nodes, the plurality of nodes may also include other nodes in addition to the service nodes.

For the consensus verification of the user reward transfer, the plurality of nodes respectively perform legality verification on the user reward transfer and reach a consensus on the result of the legality verification. Items of the legality verification include at least: verifying whether a signature of an execution node broadcasting the user reward transfer is legal, whether the user reward transfer has been tampered with in the broadcasting process, and so on.

In addition, in the embodiment of the present specification, when the determined increment in the virtual resource includes the basic increment in the virtual resource and the share-related increment in the virtual resource, in step S102, a basic user reward transfer may be constructed on the basis of the node identification of the target node and the basic increment in the virtual resource, and a share-related user reward transfer may be constructed on the basis of the node identification of the target node and the share-related increment in the virtual resource. In step S104, the constructed basic user reward transfer may be broadcast to the blockchain network, and the constructed share-related user reward transfer may be broadcast to the blockchain network.

Further, before the constructed share-related user reward transfer is broadcast to the blockchain network, it can be determined that the work use operation meets a limiting condition, wherein the limiting condition is specified by the user corresponding to the service node that publishes the target work.

For example, the limiting condition may be that the duration of the user corresponding to the target node listening to the target work reaches 1 hour. Then, only after the limiting condition is met, the constructed share-related user reward transfer will be broadcast to the blockchain network, and the target node can thus receive this portion of reward.

Further, in step S104, the constructed share-related user reward transfer may be broadcast to the blockchain network according to a broadcast rule specified by the user corresponding to the service node publishing the target work.

Furthermore, in step S102, there may be more than one share-related user reward transfer constructed on the basis of the node identification of the target node and the share-related increment in the virtual resource. After all the share-related user reward transfers are broadcast to the blockchain network, the target node can receive the full amount of share-related increment in the virtual resource.

For example, the broadcast rule may be that for every additional hour of the duration of the user corresponding to the target node listening to the target work, a share-related user reward transfer is broadcast to the blockchain network, until all share-related user reward transfers are broadcast to the blockchain network.

Similarly, in an embodiment of the present specification, when the determined increment in the virtual resource includes the basic increment in the virtual resource and the type-related increment in the virtual resource, in step S102, a basic user reward transfer may be constructed on the basis of the node identification of the target node and the basic increment in the virtual resource, and a type-related user reward transfer may be constructed on the basis of the node identification of the target node and the type-related increment in the virtual resource. In step S104, the constructed basic user reward transfer may be broadcast to the blockchain network, and the constructed type-related user reward transfer may be broadcast to the blockchain network.

Further, before the constructed type-related user reward transfer is broadcast to the blockchain network, it can be determined that the work use operation meets a limiting condition, wherein the limiting condition is specified by the user corresponding to the service node publishing the target work. It should be noted that the limiting condition that needs to be met before the share-related user reward transfer is broadcast may be different from the limiting condition that needs to be met before the type-related user reward transfer is broadcast.

For example, the limiting condition may be that the duration of the user corresponding to the target node listening to the target work reaches 2 hours. Then, only after the limiting condition is met, the constructed type-related user reward transfer will be broadcast to the blockchain network, and the target node can receive this portion of reward.

Further, in step S104, the constructed type-related user reward transfer may be broadcast to the blockchain network according to a broadcast rule specified by the user corresponding to the service node publishing the target work. It should be noted that the broadcast rule that needs to be followed for broadcasting the share-related user reward transfer may be different from the broadcast rule that needs to be followed for broadcasting the type-related user reward transfer.

Furthermore, in step S102, there may be more than one type-related user reward transfer constructed on the basis of the node identification of the target node and the type-related increment in the virtual resource. After all the type-related user reward transfers are broadcast to the blockchain network, the target node can receive the full amount of type-related increment in the virtual resource.

For example, the broadcast rule may be that for every additional 2 hours of the duration of the user corresponding to the target node listening to the target work, a type-related user reward transfer is broadcast to the blockchain network, until all type-related user reward transfers are broadcast to the blockchain network.

In the method of issuing a reward to a work user shown in FIG. 1, for a service node using a target work, a reward is issued to the service node by means of a consensus mechanism in the blockchain network, such that a virtual resource corresponding to the service node is increased. The process of issuing a reward to a service node that uses a target work is participated in by a plurality of nodes in the blockchain network by means of a consensus mechanism. Moreover, a record of issuing the reward to the service node will be stored in a blockchain by the plurality of nodes for publicity, and the data stored in the blockchain has the characteristics of not able to be tempered with. As can be seen, through the embodiments of the present specification, the process of issuing a reward to a work user is open, and a record of issuing a reward to a work publisher is credible.

The method for determining the share-related increment in the virtual resource mentioned above will be described in detail below.

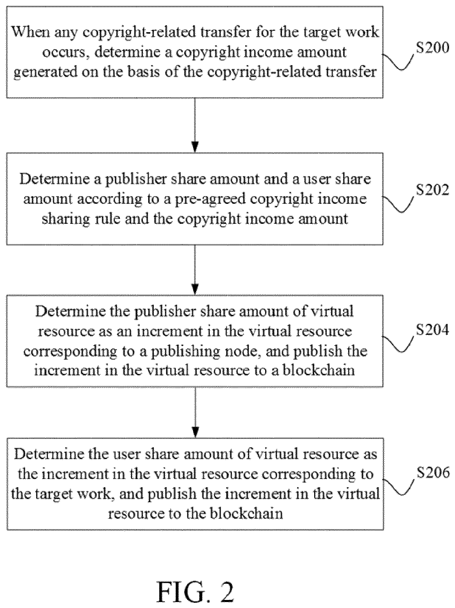

FIG. 2 is a copyright income distribution method on the basis of a blockchain according to the present invention, including the following steps:

S200: when any copyright-related transfer for the target work occurs, determining a copyright income amount generated on the basis of the copyright-related transfer.

In an embodiment of the present specification, the target work is generally a work published to the blockchain by any service node. The copyright income amount generated on the basis of the copyright-related transfer refers to the amount of a virtual resource paid to a publisher of the target work by a payer using or purchasing the target work in the copyright-related transfer.

S202: determining a publisher share amount and a user share amount according to a pre-agreed copyright income sharing rule and the copyright income amount.

In the embodiment of the present specification, the copyright income sharing rule may be pre-arranged in a smart contract as needed. The execution node may call the smart contract to distribute shares of the copyright income according to the copyright income sharing rule.

The copyright income sharing rules may specifically be a publisher share proportion and a user share proportion. In this way, the publisher share amount and the user share amount can be obtained by respectively multiplying the publisher share proportion and the user share proportion by the copyright income amount. Obviously, no matter what kind of copyright income sharing rule is adopted, the sum of the publisher share amount and the user share amount is not greater than the copyright income amount.

S204: determining the publisher share amount of virtual resource as an increment in the virtual resource corresponding to a publishing node, and publishing it to a blockchain.

The publishing node is a service node that publishes the target work. It should be noted that the executive subject (the execution node) of the present solution may also be the publishing node.

Through step S204, the publisher share amount of virtual resource is regarded as an income of the publishing node and published to the blockchain.

S206: determining the user share amount of virtual resource as an increment in the virtual resource corresponding to the target work, and publishing it to the blockchain.

The service node using the target work is uncertain, and a time point of any service node using the target work is also unpredictable; therefore, in step S206, it needs to reserve the user share amount in advance, that is, establish a corresponding relationship between the user share amount of virtual resource and the target work and store it in the blockchain. In this way, the virtual resource corresponding to the target work may be used to distribute a copyright income to the service node that uses the target work.

In addition, when the blockchain network further includes a management node, the copyright income sharing rule further includes a manager share proportion in addition to the publisher share proportion and the user share proportion. Generally, the sum of the publisher share proportion, the user share proportion, and the manager share proportion is 1.

On the basis of this, in an embodiment of the present specification, the manager share proportion may be multiplied by the copyright income amount to obtain a manager share amount; and the manager share amount of virtual resource is determined as an increment in the virtual resource corresponding to the management node and published to the blockchain. In this way, a portion of the copyright income of the target work will also be distributed to the management node.

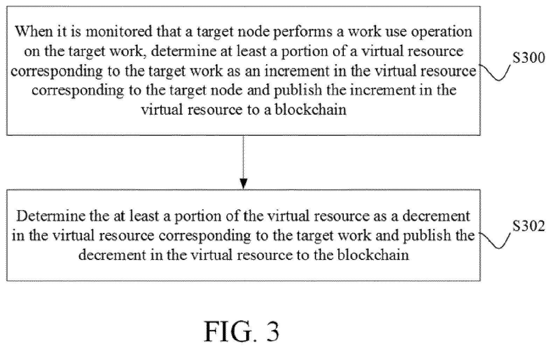

FIG. 3 is a method of distributing a copyright income to a work user on the basis of a blockchain according to an embodiment of the present specification. On the basis of the copyright income distribution method shown in FIG. 2, the method for distributing a copyright income to a work user includes the following steps:

S300: when it is monitored that a target node performs a work use operation on a target work, determining at least a portion of a virtual resource corresponding to the target work as an increment in the virtual resource corresponding to the target node and publishing it to a blockchain.

S302: determining the at least a portion of the virtual resource as a decrement in the virtual resource corresponding to the target work, and publishing it to the blockchain.

The executive subject of the present solution may be the same as the executive subject of the method shown in FIG. 1.

In an embodiment of the present specification, the target node is generally any service node. Moreover, the target node may also be a specific service node.

It should be noted that, when at least a portion of the virtual resource corresponding to the target work is determined as the increment in the virtual resource corresponding to the target node and published to the blockchain, the at least a portion of the virtual resource should also be determined as the decrement in the virtual resource corresponding to the target work and published to the blockchain. In this way, on one hand, on the basis of the copyright income distribution method shown in FIG. 2, the virtual resource corresponding to the target work will be increased with the continuous occurrence of copyright-related transfers for the target work; on the other hand, on the basis of the method for distributing a copyright income to a work user shown in FIG. 3, the virtual resource corresponding to the target work will also be decreased with the continuous occurrence of work use operations for the target work.

In an embodiment of the present specification, the increment in the virtual resource corresponding to the target node may be determined according to a preset determination rule.

Wherein, the determination rule may be set according to actual needs, which is not limited in the present specification. For example, a specified proportion of virtual resource in the virtual resource corresponding to the target work may be determined as the increment in the virtual resource corresponding to the target node.

For example, whenever the target node performs a work use operation on the target work, 1% of the stock may be determined as the increment in the virtual resource corresponding to the target node. Assuming that the stock of the virtual resource corresponding to the target node is currently 100 TONs, when the target node uses the target work for the first time, 100 ^{∗} 1% = 1 TON is determined as the increment in the virtual resource corresponding to the target node. When the target node uses the target work for the second time, 99 ^{∗} 1% = 0.99 TONs are determined as the increment in the virtual resource corresponding to the target node.

In the method of issuing a reward to a user as shown in FIG. 1, on the basis of the copyright income distribution method shown in FIG. 2 and the method of issuing a copyright income to a user shown in FIG. 3, when any copyright-related transfer for the target work occurs, a copyright income amount generated on the basis of the copyright-related transfer is determined; a user share amount is determined according to a pre-agreed copyright income sharing rule and the copyright income amount, wherein the user share amount is less than the copyright income amount; and subsequently, the user share amount of virtual resource is determined as the increment in the virtual resource corresponding to the target work and published to the blockchain.

On the basis of this, at least a portion of the virtual resource corresponding to the target work is determined as the share-related increment in the virtual resource, and the at least a portion of the virtual resource is determined as a decrement in the virtual resource corresponding to the target work and published to the blockchain.

As can be seen, in the method of issuing a reward to a work user shown in FIG. 1, a portion of the reward received by the work user may come from the copyright income of the target work being used.

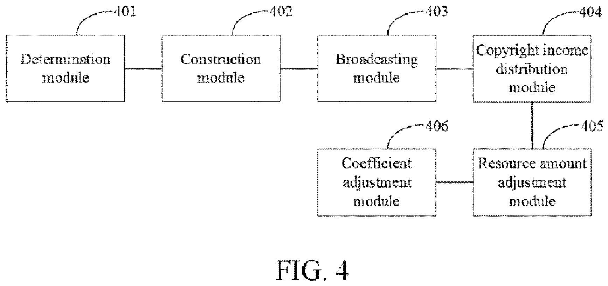

According to the method of issuing a reward to a work user on the basis of a blockchain as shown in FIG. 1, an embodiment of the present specification further provides a device of issuing a reward to a work user on the basis of a blockchain. As shown in FIG. 4, a blockchain network comprises a plurality of service nodes, a virtual resource is used as a transfer medium among the plurality of service nodes to conduct a copyright-related transfer, and the device is a node in the blockchain network.

The device includes:
a determination module 401 configured to, when it is monitored that a target node performs a work use operation on a target work, determine an increment in the virtual resource according to the work use operation, wherein the target node is any of the service nodes;
a construction module 402 configured to construct a user reward transfer on the basis of a node identification of the target node and the determined increment in the virtual resource; and
a broadcasting module 403 configured to broadcast the user reward transfer to the blockchain network, such that after a plurality of nodes in the blockchain network pass a consensus verification of the user reward transfer, a corresponding relationship between the node identification and the determined increment in the virtual resource is established and stored in a blockchain.

The determination module 401 is configured to determine a basic increment in the virtual resource according to the work use operation; or determine the basic increment in the virtual resource according to the work use operation, and determine, on the basis of the target work, at least one of a share-related increment in the virtual resource and a type-related increment in the virtual resource.

The determination module 401 is configured to, if the work use operation is a work download operation, determine a specified resource amount of virtual resource as the basic increment in the virtual resource; and if the work use operation is a work viewing or listening operation, determine the basic increment in the virtual resource according to a usage duration corresponding to the work viewing or listening operation, wherein the usage duration is positively correlated with the basic increment in the virtual resource.

The device further includes: a copyright income distribution module 404 configured to, when any copyright-related transfer for the target work occurs, determine a copyright income amount generated on the basis of the copyright-related transfer; determine a user share amount according to a pre-agreed copyright income sharing rule and the copyright income amount, wherein the user share amount is less than the copyright income amount; and determine the user share amount of virtual resource as the increment in the virtual resource corresponding to the target work, and publish the increment in the virtual resource to the blockchain; and
the determination module 401 configured to determine at least a portion of a virtual resource corresponding to the target work as the share-related increment in the virtual resource, and determine the at least a portion of the virtual resource as a decrement in the virtual resource corresponding to the target work and publish the decrement in the virtual resource to the blockchain.

The determination module 401 is configured to determine a work type corresponding to the target work as a target work type; according to a preset corresponding relationship between work types and resource amounts, determine a resource amount corresponding to the target work type as a target resource amount; and determine the target resource amount of virtual resource as the type-related increment in the virtual resource.

The device further includes: a resource amount adjustment module 405 configured to receive a resource amount adjustment instruction; and adjust, according to the resource amount adjustment instruction, a resource amount corresponding to at least one work type.

The determination module 401 is configured to determine a work type corresponding to the target work as a target work type; according to preset corresponding relationships between work types and coefficients, determine a coefficient corresponding to the target work type as a target coefficient; and multiply the basic increment in the virtual resource by the target coefficient to obtain the type-related increment in the virtual resource.

The device further includes: a coefficient adjustment module 406 configured to receive a coefficient adjustment instruction; and adjust, according to the coefficient adjustment instruction, a coefficient corresponding to at least one work type.

The determined increment in the virtual resource comprises a basic increment in the virtual resource and a share-related increment in the virtual resource;
the construction module 402 is configured to construct a basic user reward transfer on the basis of the node identification of the target node and the basic increment in the virtual resource, and construct a share-related user reward transfer on the basis of the node identification of the target node and the share-related increment in the virtual resource; and
the broadcast module 403 is configured to broadcast the constructed basic user reward transfer to the blockchain network, and broadcast the constructed share-related user reward transfer to the blockchain network.

The broadcasting module 403 is configured to, before broadcasting the constructed share-related user reward transfer to the blockchain network, determine that the work use operation meets a limiting condition, wherein the limiting condition is specified by the user corresponding to the service node that publishes the target work.

The broadcasting module 403 is configured to broadcast, according to a broadcast rule specified by the user corresponding to the service node that publishes the target work, the constructed share-related user reward transfer to the blockchain network.

The determined increment in the virtual resource comprises a basic increment in the virtual resource and a type-related increment in the virtual resource;
the construction module 402 is configured to construct a basic user reward transfer on the basis of the node identification of the target node and the basic increment in the virtual resource, and construct a type-related user reward transfer on the basis of the node identification of the target node and the type-related increment in the virtual resource; and
the broadcasting module 403 is configured to broadcast the constructed basic user reward transfer to the blockchain network, and broadcast the constructed type-related user reward transfer to the blockchain network.

The broadcasting module 403 is configured to, before broadcasting the constructed type-related user reward transfer to the blockchain network, determine that the work use operation meets a limiting condition, wherein the limiting condition is specified by the user corresponding to the service node that publishes the target work.

The broadcasting module 403 is configured to broadcast, according to a broadcast rule specified by the user corresponding to the service node that publishes the target work, the constructed type-related user reward transfer to the blockchain network.

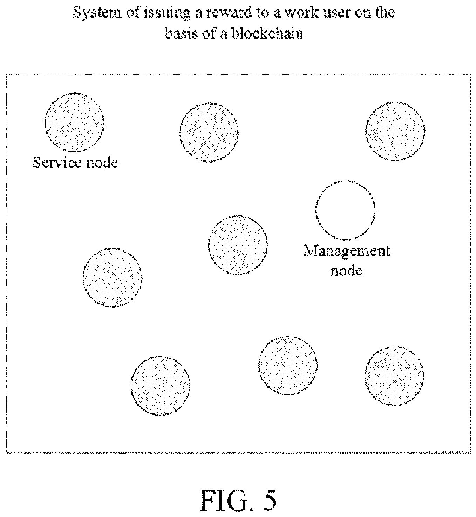

According to the method of issuing a reward to a work user on the basis of a blockchain shown in FIG. 1, an embodiment of the present specification further correspondingly provides a system of issuing a reward to a work user on the basis of a blockchain. As shown in FIG. 5, the system includes a blockchain network composed of a plurality of service nodes, wherein the service nodes have authorities to publish works to the blockchain, and a virtual resource is used as a transfer medium among the plurality of service nodes to conduct a copyright-related transfer;
any node in the blockchain network is configured to, when it is monitored that a target node performs a work use operation on a target work, determine an increment in the virtual resource according to the work use operation, wherein the target node is any of the service nodes; construct a user reward transfer on the basis of a node identification of the target node and the determined increment in the virtual resource; and broadcast the user reward transfer to the blockchain network; and
after a plurality of nodes in the blockchain network pass a consensus verification of the user reward transfer, a corresponding relationship between the node identification and the determined increment in the virtual resource is established and stored in a blockchain.

Further, the blockchain network further includes a management node.

The embodiments of the present specification further provide a computing apparatus, which includes at least a memory, a processor, and a computer program stored in the memory and executable by the processor, wherein the processor executes the program to implement the function of the method described in FIG. 1 is implemented.

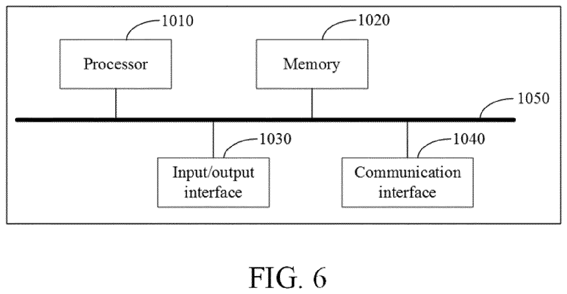

FIG. 6 is a schematic hardware structure diagram of a more specific computing device according to an embodiment of the present specification. The device may include a processor 1010, a memory 1020, an input/output interface 1030, a communication interface 1040, and a bus 1050. Wherein, the processor 1010, the memory 1020, the input/output interface 1030, and the communication interface 1040 realize communication connections between each other in the device through the bus 1050.

The processor 1010 may be implemented by a general-purpose CPU (Central Processing Unit), a microprocessor, an application specific integrated circuit (ASIC), or one or more integrated circuits, for executing related programs to realize the technical solutions provided in the embodiments of the present specification.

The memory 1020 may be implemented in the form of a ROM (Read Only Memory), a RAM (Random Access Memory), a static storage device, a dynamic storage device, and so on. The memory 1020 may store an operating system and other application programs. When the technical solution provided in the embodiment of the present specification is implemented through software or firmware, related program code is stored in the memory 1020 and called by the processor 1010 for execution.

The input/output interface 1030 is configured to connect an input/output module to realize information input and output. The input/output module may be configured in the device (not shown) as a component, or may also be externally connected to the device to provide a corresponding function. Wherein the input device may include a keyboard, a mouse, a touch screen, a microphone, various sensors, and the like. The output device may include a display, a speaker, a vibrator, an indicator, and the like.

The communication interface 1040 is configured to connect a communication module (not shown) to realize communication interaction between the present device and another device. Wherein the communication module may realize communication in a wired manner (such as a USB and a network cable), or in a wireless manner (such as a mobile network, WIFI, and Bluetooth).

The bus 1050 includes a path, for transmitting information between various components of the device (for example, the processor 1010, the memory 1020, the input/output interface 1030, and the communication interface 1040).

It should be noted that although only the processor 1010, the memory 1020, the input/output interface 1030, the communication interface 1040, and the bus 1050 are shown in the above device, in the specific implementation process, the device may further include other components necessary for implementing normal operation. In addition, those skilled in the art can understand that the above device may also include only the components necessary for implementing the solutions of the embodiments of the present specification, rather than all the components shown in the drawings.

The embodiments of the present specification further provide a computer-readable storage medium on which a computer program is stored, and when the program is executed by a processor, the function of the method described in FIG. 1 is implemented.

The computer-readable medium includes permanent and non-permanent, removable and non-removable media, and can implement information storage by using any method or technology. The information may be computer-readable instructions, data structures, modules of programs or other data. Examples of a storage medium of a computer include, but are not limited to, a phase change memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible by a computing device. According to the definitions herein, the computer-readable medium does not include transitory computer-readable media (transitory media), such as a modulated data signal and a carrier wave.

According to the description of the above embodiments, those skilled in the art can clearly understand that the embodiments of the present specification can be implemented by means of software plus a necessary general hardware platform. On the basis of such understanding, the technical solutions of the embodiments of the present specification essentially or parts contributing to the prior art may be embodied in the form of a software product. The software product may be stored in a storage medium, such as a ROM/RAM, a magnetic disk, and an optical disk, and includes several instructions to enable a computer device (which may be a personal computer, a server, or a network device, etc.) to perform the methods described in the various embodiments or some parts of the embodiments of the present specification.

The system, method, module, or unit described in the above embodiments may specifically be implemented by a computer chip or entity, or implemented by a product with a certain function. A typical implementation device is a computer, the specific form of a computer may be a personal computer, a laptop computer, a cellular telephone, a camera phone, a smartphone, a personal digital assistant, a media player, a navigation device, an email transceiver device, a gaming console, a tablet computer, a wearable device, or a combination of any of these devices.

The various embodiments in the present specification are described in a progressive manner. For the same or similar parts in the various embodiments, reference may be made to each other. Each embodiment focuses on differences from other embodiments. In particular, the device and device embodiments are basically similar to the method embodiment, the description thereof is relatively simple, and for related parts, reference may be made to the part of the description of the method embodiment. The method embodiment described above is only illustrative. The modules described as separate components may or may not be physically separated. When implementing the solution of the embodiment of the present specification, the functions of the various modules may be implemented in the same or a plurality of software and/or hardware implementations. Some or all of the modules may also be selected according to actual needs to achieve the objective of the solution of the present embodiment. Those of ordinary skill in the art can understand and implement it without creative efforts.

The above are only specific implementations of the embodiments of the present specification. It should be pointed out that for those of ordinary skill in the art, several improvements and modifications can be made without departing from the principle of the embodiments of the present specification, and these improvements and modifications should also be regarded as the protection scope of the embodiments of the present specification.

## Claims

1. A method of issuing a reward to a work user on the basis of a blockchain, wherein a blockchain network comprises a plurality of service nodes, a virtual resource is used as a transfer medium among the plurality of service nodes to conduct a copyright-related transfer, the method comprising:
when it is monitored that a target node performs a work use operation on a target work, determining an increment in the virtual resource according to the work use operation, wherein the target node is any of the service nodes;
constructing a user reward transfer on the basis of a node identification of the target node and the determined increment in the virtual resource; and
broadcasting the user reward transfer to the blockchain network, such that after a plurality of nodes in the blockchain network pass a consensus verification of the user reward transfer, a corresponding relationship between the node identification and the determined increment in the virtual resource is established and stored in a blockchain.

2. The method according to claim 1, wherein determining the increment in the virtual resource according to the work use operation specifically comprises:
determining a basic increment in the virtual resource according to the work use operation; or
determining the basic increment in the virtual resource according to the work use operation, and determining, on the basis of the target work, at least one of a share-related increment in the virtual resource and a type-related increment in the virtual resource.

3. The method according to claim 2, wherein determining the basic increment in the virtual resource according to the work use operation specifically comprises:
if the work use operation is a work download operation, determining a specified resource amount of virtual resource as the basic increment in the virtual resource; and
if the work use operation is a work viewing or listening operation, determining the basic increment in the virtual resource according to a usage duration corresponding to the work viewing or listening operation, wherein the usage duration is positively correlated with the basic increment in the virtual resource.

4. The method according to claim 2, further comprising:
when any copyright-related transfer for the target work occurs, determining a copyright income amount generated on the basis of the copyright-related transfer;
determining a user share amount according to a pre-agreed copyright income sharing rule and the copyright income amount, wherein the user share amount is less than the copyright income amount; and
determining the user share amount of virtual resource as the increment in the virtual resource corresponding to the target work, and publishing the increment in the virtual resource to the blockchain;
wherein determining, on the basis of the target work, the share-related increment in the virtual resource specifically comprises:
determining at least a portion of a virtual resource corresponding to the target work as the share-related increment in the virtual resource, and determining the at least a portion of the virtual resource as a decrement in the virtual resource corresponding to the target work and publishing the decrement in the virtual resource to the blockchain.

5. The method according to claim 2, wherein determining, on the basis of the target work, a type-related increment in the virtual resource specifically comprises:
determining a work type corresponding to the target work as a target work type;
according to a preset corresponding relationship between work types and resource amounts, determining a resource amount corresponding to the target work type as a target resource amount; and
determining the target resource amount of virtual resource as the type-related increment in the virtual resource.

6. The method according to claim 5, further comprising:
receiving a resource amount adjustment instruction; and
adjusting, according to the resource amount adjustment instruction, a resource amount corresponding to at least one work type.

7. The method according to claim 2, wherein determining, on the basis of the target work, a type-related increment in the virtual resource specifically comprises:
determining a work type corresponding to the target work as a target work type;
according to a preset corresponding relationship between work types and coefficients, determining a coefficient corresponding to the target work type as a target coefficient; and
multiplying the basic increment in the virtual resource by the target coefficient to obtain the type-related increment in the virtual resource.

8. The method according to claim 7, further comprising:
receiving a coefficient adjustment instruction; and
adjusting, according to the coefficient adjustment instruction, a coefficient corresponding to at least one work type.

9. The method according to claim 2, wherein the determined increment in the virtual resource comprises a basic increment in the virtual resource and a share-related increment in the virtual resource;
wherein constructing the user reward transfer on the basis of the node identification of the target node and the determined increment in the virtual resource specifically comprises:
constructing a basic user reward transfer on the basis of the node identification of the target node and the basic increment in the virtual resource, and constructing a share-related user reward transfer on the basis of the node identification of the target node and the share-related increment in the virtual resource; and
wherein broadcasting the user reward transfer to the blockchain network specifically comprises:
broadcasting the constructed basic user reward transfer to the blockchain network, and broadcasting the constructed share-related user reward transfer to the blockchain network.

10. The method according to claim 9, wherein, before broadcasting the constructed share-related user reward transfer to the blockchain network, the method further comprises:
determining that the work use operation meets a limiting condition, wherein the limiting condition is specified by a user corresponding to a service node that publishes the target work.

11. The method according to claim 9, wherein broadcasting the constructed share-related user reward transfer to the blockchain network specifically comprises:
broadcasting, according to a broadcast rule specified by a user corresponding to a service node that publishes the target work, the constructed share-related user reward transfer to the blockchain network.

12. The method according to claim 2, wherein the determined increment in the virtual resource comprises a basic increment in the virtual resource and a type-related increment in the virtual resource;
wherein constructing the user reward transfer on the basis of the node identification of the target node and the determined increment in the virtual resource specifically comprises:
constructing a basic user reward transfer on the basis of the node identification of the target node and the basic increment in the virtual resource, and constructing a type-related user reward transfer on the basis of the node identification of the target node and the type-related increment in the virtual resource; and
wherein broadcasting the user reward transfer to the blockchain network specifically comprises:
broadcasting the constructed basic user reward transfer to the blockchain network, and broadcasting the constructed type-related user reward transfer to the blockchain network.

13. The method according to claim 12, wherein, before broadcasting the constructed type-related user reward transfer to the blockchain network, the method further comprises:
determining that the work use operation meets a limiting condition, wherein the limiting condition is specified by a user corresponding to a service node that publishes the target work.

14. The method according to claim 12, wherein broadcasting the constructed type-related user reward transfer to the blockchain network specifically comprises:
broadcasting, according to a broadcast rule specified by a user corresponding to a service node that publishes the target work, the constructed type-related user reward transfer to the blockchain network.

15. A device of issuing a reward to a work user on the basis of a blockchain, wherein a blockchain network comprises a plurality of service nodes, a virtual resource is used as a transfer medium among the plurality of service nodes to conduct a copyright-related transfer, and the device is a node in the blockchain network; and
the device comprises:
a determination module, configured to, when it is monitored that a target node performs a work use operation on a target work, determine an increment in the virtual resource according to the work use operation, wherein the target node is any of the service nodes;
a construction module, configured to construct a user reward transfer on the basis of a node identification of the target node and the determined increment in the virtual resource; and
a broadcasting module, configured to broadcast the user reward transfer to the blockchain network, such that after a plurality of nodes in the blockchain network pass a consensus verification of the user reward transfer, a corresponding relationship between the node identification and the determined increment in the virtual resource is established and stored in a blockchain.

16. The device according to claim 15, wherein the determination module is configured to determine a basic increment in the virtual resource according to the work use operation; or determine the basic increment in the virtual resource according to the work use operation, and determine, on the basis of the target work, at least one of a share-related increment in the virtual resource and a type-related increment in the virtual resource.

17. The device according to claim 16, wherein the determination module is configured to, if the work use operation is a work download operation, determine a specified resource amount of virtual resource as the basic increment in the virtual resource; and if the work use operation is a work viewing or listening operation, determine the basic increment in the virtual resource according to a usage duration corresponding to the work viewing or listening operation, wherein the usage duration is positively correlated with the basic increment in the virtual resource.

18. The device according to claim 16, further comprising:
a copyright income distribution module, configured to, when any copyright-related transfer for the target work occurs, determine a copyright income amount generated on the basis of the copyright-related transfer; determine a user share amount according to a pre-agreed copyright income sharing rule and the copyright income amount, wherein the user share amount is less than the copyright income amount; and determine the user share amount of virtual resource as the increment in the virtual resource corresponding to the target work, and publish the increment in the virtual resource to the blockchain;
wherein the determination module is configured to determine at least a portion of a virtual resource corresponding to the target work as the share-related increment in the virtual resource, and determine the at least a portion of the virtual resource as a decrement in the virtual resource corresponding to the target work and publish the decrement in the virtual resource to the blockchain.

19. The device according to claim 18, wherein the determination module is configured to determine a work type corresponding to the target work as a target work type; according to a preset corresponding relationship between work types and resource amounts, determine a resource amount corresponding to the target work type as a target resource amount; and determine the target resource amount of virtual resource as the type-related increment in the virtual resource.

20. The device according to claim 19, further comprising:
a resource amount adjustment module, configured to receive a resource amount adjustment instruction; and adjust, according to the resource amount adjustment instruction, a resource amount corresponding to at least one work type.

21. The device according to claim 16, wherein the determination module is configured to determine a work type corresponding to the target work as a target work type; according to a preset corresponding relationship between work types and coefficients, determine a coefficient corresponding to the target work type as a target coefficient; and multiply the basic increment in the virtual resource by the target coefficient to obtain the type-related increment in the virtual resource.

22. The device according to claim 21, further comprising:
a coefficient adjustment module, configured to receive a coefficient adjustment instruction; and adjust, according to the coefficient adjustment instruction, a coefficient corresponding to at least one work type.

23. The device according to claim 16, wherein the determined increment in the virtual resource comprises a basic increment in the virtual resource and a share-related increment in the virtual resource;
the construction module is configured to construct a basic user reward transfer on the basis of the node identification of the target node and the basic increment in the virtual resource, and construct a share-related user reward transfer on the basis of the node identification of the target node and the share-related increment in the virtual resource; and
the broadcasting module is configured to broadcast the constructed basic user reward transfer to the blockchain network, and broadcast the constructed share-related user reward transfer to the blockchain network.

24. The device according to claim 13, wherein the broadcasting module is configured to, before broadcasting the constructed share-related user reward transfer to the blockchain network, determine that the work use operation meets a limiting condition, wherein the limiting condition is specified by a user corresponding to a service node that publishes the target work.

25. The device according to claim 13, wherein the broadcasting module is configured to broadcast, according to a broadcast rule specified by a user corresponding to a service node that publishes the target work, the constructed share-related user reward transfer to the blockchain network.

26. The device according to claim 16, wherein the determined increment in the virtual resource comprises a basic increment in the virtual resource and a type-related increment in the virtual resource;
the construction module is configured to construct a basic user reward transfer on the basis of the node identification of the target node and the basic increment in the virtual resource, and construct a type-related user reward transfer on the basis of the node identification of the target node and the type-related increment in the virtual resource; and
the broadcasting module is configured to broadcast the constructed basic user reward transfer to the blockchain network, and broadcast the constructed type-related user reward transfer to the blockchain network.

27. The device according to claim 26, wherein the broadcasting module is configured to, before broadcasting the constructed type-related user reward transfer to the blockchain network, determine that the work use operation meets a limiting condition, wherein the limiting condition is specified by a user corresponding to a service node that publishes the target work.

28. The device according to claim 26, wherein the broadcasting module is configured to broadcast, according to a broadcast rule specified by a user corresponding to a service node that publishes the target work, the constructed type-related user reward transfer to the blockchain network.

29. A system of issuing a reward to a work user on the basis of a blockchain, comprising a blockchain network composed of a plurality of service nodes, wherein the service nodes have authorities to publish works to a blockchain, and a virtual resource is used as a transfer medium among the plurality of service nodes to conduct a copyright-related transfer;
any node in the blockchain network is configured to: when it is monitored that a target node performs a work use operation on a target work, determine an increment in the virtual resource according to the work use operation, wherein the target node is any of the service nodes; construct a user reward transfer on the basis of a node identification of the target node and the determined increment in the virtual resource; and broadcast the user reward transfer to the blockchain network; and
after a plurality of nodes in the blockchain network pass a consensus verification of the user reward transfer, a corresponding relationship between the node identification and the determined increment in the virtual resource is established and stored in a blockchain.

30. A computing apparatus, comprising a memory, a processor, and a computer program stored in the memory and executable by the processor, wherein the processor executes the program to implement the method according to any one of claims 1-14.
